# EUROPEAN PATENT SPECIFICATION

(11) **EP 2 735 439 B1**
(45) Date of publication and mention of the grant of the patent: **17.06.2015**
(21) Application number: 13193439.0
(22) Date of filing: 19.11.2013
(51) Int. Cl.: B32B 5/02, B32B 5/06, B32B 5/12, B32B 5/18, B32B 5/20, B32B 5/24, B32B 5/26

(54) **Method of Producing an Insulation Component, and an Insulation Component Produced by the Method**
Verfahren zur Herstellung einer Dämmkomponente und durch dieses Verfahren hergestellte Dämmkomponente
Procédé de production d'un composant d'isolation et composant d'isolation produit par le procédé

(30) Priority: 23.11.2012 GB 201221120
(43) Date of publication of application: 28.05.2014
(73) Proprietor: Automotive Insulations Limited, Warwickshire CV22 7DH (GB)
(72) Inventor: Griffin, James Anthony, Rugby, Warwickshire CV22 7DH (GB); Westwood, Kevin Vincent, Rugby, Warwickshire CV22 7DH (GB)
(74) Representative: Chettle, Adrian John

(56) References cited:
- WO-A1-97/48576
- GB-A- 2 313 096
- US-A1- 2008 166 508
- DATABASE WPI Week 200943 Thomson Scientific, London, GB; AN 2009-K44918 XP002718343, & JP 2009 132294 A (INOAC CORP KK) 18 June 2009 (2009-06-18)
- DATABASE WPI Week 201232 Thomson Scientific, London, GB; AN 2012-C20928 XP002718344, & CN 202 130 404 U (JIANGYIN YANLI PLASTIC PROD CO LTD) 1 February 2012 (2012-02-01)
- DATABASE WPI Week 201235 Thomson Scientific, London, GB; AN 2012-E92397 XP002718345, & CN 202 192 827 U (NINGBO SUOGERDA NEW MATERIAL CO LTD) 18 April 2012 (2012-04-18)

## Description

The present invention relates to a method for producing an insulation component, such as a pad or mat, from sheet material. The invention also relates to an insulation component produced by the method.

Insulation, to prevent the transmission of noise and/or heat, is required in many circumstances. Frequently such insulation must be shaped to suit a boundary, and it may be convenient for such insulation to be pre-cut from sheet material to ensure accurate fitting in the area of intended use.

A particular instance where insulation is required is in a motor vehicle. Many kinds of heat and noise insulation materials may be incorporated on the vehicle sub-structure, and these are typically pre-formed as pads or mats for application during assembly of the vehicle.

In order to reduce weight and bulk, insulation materials such as dense felt have generally been superseded by lightweight insulation in which the constituent materials are specially selected to provide the required degree of noise and/or heat insulation.

One form of such insulation comprises lightweight polyurethane foam sheet on one or both sides of which is provided a protective scrim. A composite layered sheet material is pressed and cut to the required shape, and exhibits good insulation properties at relatively low cost.

However one characteristic of insulation components produced in this way is that they exhibit a low resistance to bending. Generally speaking such components may be described as not self-supporting, especially if greater than 100mm x 100mm. Low resistance to bending has the advantage that an insulation pad or mat may be bent to fit a non-flat substrate, but the inherent lack of stiffness of the component means that some means of fixing the component in place must usually be provided.

Thus in one example an insulation pad may be fixed in a substantially vertical plane to a vehicle bulkhead by double sided tape. In another example an under bonnet mat of a vehicle may be attached in a substantially horizontal plane by a plurality of screws or clips.

In the first instance described above, the tape represents an additional material and fitting cost, and also requires that a fitter place the pad accurately before the tape is engaged - repositioning is generally not possible. Furthermore inherent resilience of the pad may cause the tape to unpeel before the pad takes a final set.

In the case of under bonnet insulation of a vehicle, the position of fixings is generally not ideal, being dictated by the under bonnet frame, and sagging may occur over time.

What is required is a solution which addresses these disadvantages without imposing a weight or cost penalty.

WO97/48576 discloses a multi-layered insulation sheet from which may be derived the pre-characterizing portion of claim 1 appended hereto.

According to a first aspect of the invention there is provided an insulation component of heat bonded layered sheet materials, said sheet materials comprising a layer of polyurethane foam and layers of non woven synthetic scrim, characterized in that said scrim has a greater elongation in one direction than in a direction orthogonal thereto, wherein said component comprises two adjacent layers of said scrim having the respective directions of greatest elongation arranged at greater than 30°.

An insulation component according to the invention exhibits increased stiffness as compared with an identical component having a single layer of scrim. Moreover this increased stiffness is exhibited notwithstanding that a single layer of scrim has the same thickness as the two layers of scrim of the invention, or greater thickness.

It will thus be understood that according to the invention an insulation component can be produced having the same material content and weight as a prior art component, but with substantially increased stiffness. Stiffness is a useful property because the component is to some extent self-supporting and thus more resistant to, for example, sagging.

In an embodiment of the invention the insulated component adopts a somewhat rigidified curved form, and exhibits resistance to deformation both in a direction of greater curvature and in the direction of lesser curvature. In certain circumstances the direction of curvature may be equal in all directions, so that the component is part-spherical. As is well known a rigidified curved component has increased resistance to bending, particularly in the case of a complex curve having curvature in mutually orthogonal planes.

In one embodiment a greater number of scrim layers is provided on one side of said foam layer than on the other side. Typically two layers of scrim may be provided on one side of a foam layer, and one layer of scrim on the other side. Such an arrangement provides protection to the foam layer whilst adding stiffness to the component.

An increasing angle between the directions of greatest elongation may increase the stiffness imparted to the component, and may also impart a curvature whereby the increasing stiffness is generated.

In use the direction of greatest elongation of the scrim layers is arranged to give the required curvature and can be assessed empirically according to the scrim materials which are available.

The layers of the insulation component of the invention are internally bonded to each other, for example by activation of heat activated adhesive in a heated press. The heat activated adhesive may be applied to one or more layers, for example to one side of the scrim.

According to a second aspect of the invention there is provided a method of producing an insulation component comprising laying sheet materials one upon another, said materials comprising a core of unset resilient polyurethane foam, and two adjacent outer layers of scrim, said outer layers having greater elongation in one direction than another, and the outer layers having the respective directions of greatest elogation arranged at greater than 30°; simultaneously pressing and cutting said layers in a heated press, to both adhere the layers and set the foam core; and removing said component.

The method of the invention compresses the unset foam to the required extent, so as to provide a densified polyurethane core, and heats the foam so as to set it at the desired thickness whilst bonding the scrim layers thereto.

The method may include the preparatory step of providing a heat-actuated adhesive on one or more of said layers to bond adjacent layers in said press.

The method may further comprise providing a scrim layer on either side of said core; and substantially contacting said scrim layers about the periphery of said component in said press, preferably substantially flattening the periphery in said press to form a rim.

The method may comprise simultaneously flattening the periphery of said component in said press whilst pressing a region within said periphery to a lesser extent.

Other features of the invention will be apparent from the following description of a preferred embodiment illustrated by way of example in the accompanying drawings in which:-
Fig. 1 illustrates layers of an insulation component according to the invention, prior to adhering thereof.
Fig. 2 illustrates the layers of Fig. 1 in perspective as overlying sheets of a continuous roll.
Fig. 3 illustrates a component according to the invention in section.
Fig. 4 illustrates another component according to the invention in section.
Fig. 5 illustrates in plan a component according to the invention in outline in an indexing composite web.
Fig. 6 illustrates a finished component according to the invention in flat form.
Fig. 7 illustrates in side elevation a curved component according to the invention.
Fig. 8 illustrates a pad according to the invention in situ against a vehicle panel.
Fig. 9 illustrates a mat according to the invention for application to a vehicle bonnet.

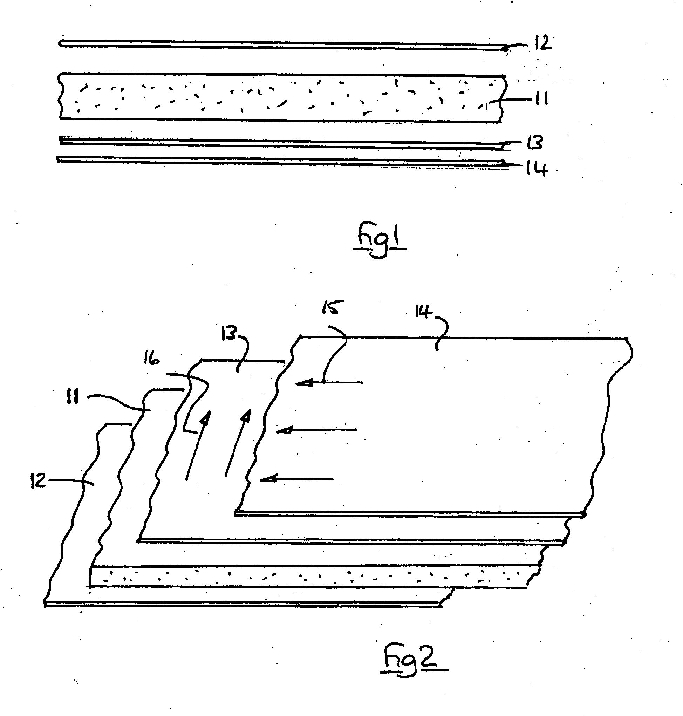

With reference to the drawings, Figs. 1 and 2 illustrate a typical layered sequence according to the invention, and comprising a core of raw lightweight foam 11, having on one side a single scrim layer 12, and on the other side two scrim layers 13,14.

The foam 11 comprises an unset polyurethane foam sheet having resilience in the thickness direction. Such foam may have a somewhat 'crunchy' feel. Typically the thickness of this foam core is in the range 10-30mm.

The scrim layers 12-14 are typically identical, and may comprise a needle punched non woven viscose/polyester sheet material. In the invention the adjacent scrim layers 13,14 have different elongation (stretchability) in mutually orthogonal directions.

Thus, as illustrated in Fig. 2, the adjacent scrim layers 13,14 have greatest elongation in the mutually perpendicular directions illustrated by arrows 15,16.

The single scrim layer may or may not have differential elongation, but in one embodiment all three scrim layers are identical so as to achieve maximum economies of scale.

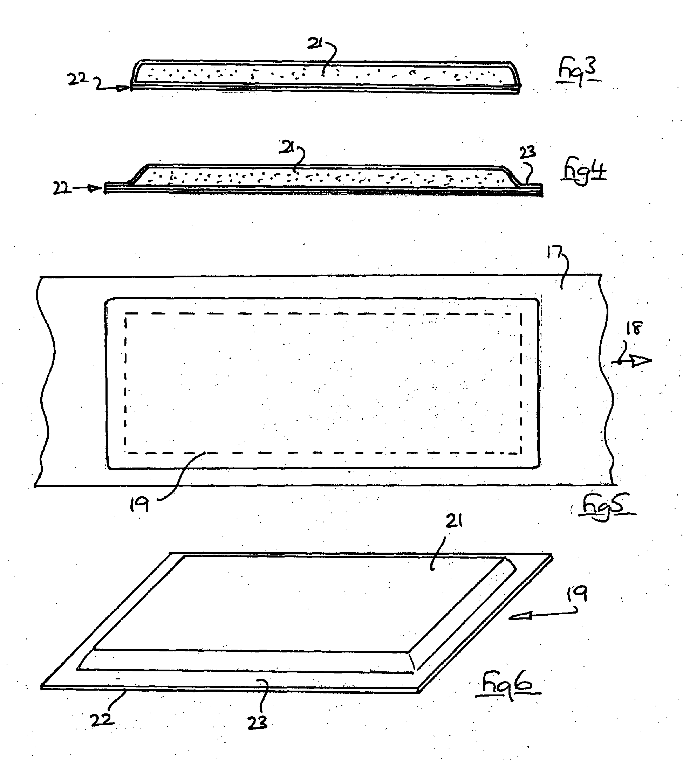

In use the layers are pressed between heated upper and lower platens of a press, and simultaneously a knife cuts out an individual insulation pad or mat, as illustrated in Fig. 3; such a mat may have an adhered continuous rim 23 as illustrated in Fig. 4.

Fig. 5 illustrates a composite web 17 from above, having layers corresponding to Figs. 1 and 2. The web typically indexes through a press in the direction of arrow 18, and produces individual pads 19 of the form illustrated by way of example in Fig. 6.

Each pad consists of a partly compressed centre region 21, and seam 22 at which the scrim layers are substantially brought together to encase the centre region.

The heated upper and lower platens of the press set the foam at the pressed thickness, typically 5-20 mm, so that upon opening of the press, the foam does not expand to the original thickness. During this heating step, the foam passes from a somewhat 'crunchy' state to a smoothly densified and compressible state. In this densified condition the foam provides a core which exhibits good noise and heat insulation properties. The process converting unset polyurethane foam sheet to set foam sheet is well understood, and need not be further described here. Internal stresses are generated within the scrim layers so as to impart curvature upon release of the component from the mould.

The press tool ensures that the scrim layers above and below are brought together, at least to substantially encase the foam core, as illustrated in the sectional view of Fig. 3.

Commonly however, a continuous rim 23 is provided about the periphery of the pad or mat 19, and within which the foam is fully compressed and adhered. The rim may have a width in the range 1-25mm.

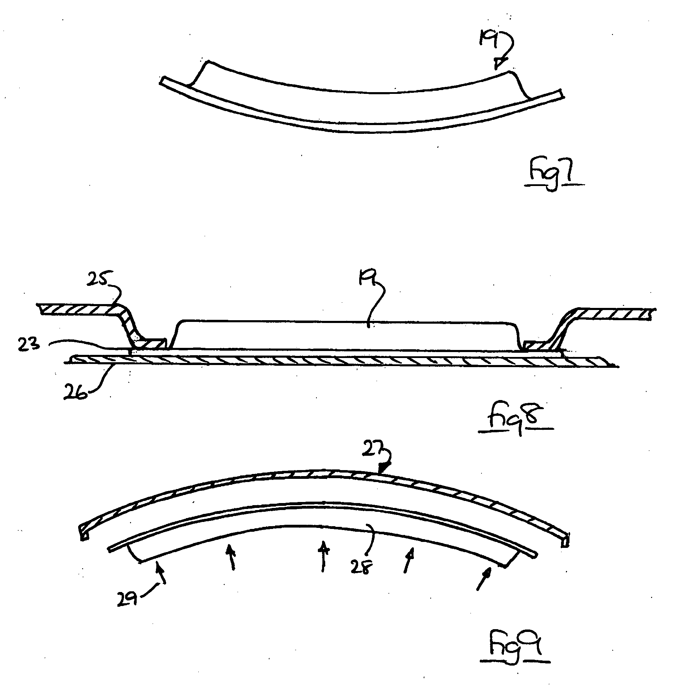

Fig. 7 shows the typical free form of a mat or pad according to the invention, and in which the adjacent layers of scrim impart a curving force to the component. In the illustration of Fig. 7 the pad 19 has a concave appearance, but a convex form is equally possible. The curvature is somewhat exaggerated in order to illustrate the effect of the invention.

In use such a curved pad may be used in a motor vehicle by bending and inserting the flattened rim 23 into a space defined between adjacent metal panels 25,26 so as to impede the passage of noise and heat in a direction perpendicular to the panel 26. The pad is retained by the inherent resilience thereof, and no additional fixing means is necessary.

In the example of Fig. 9, a curved vehicle bonnet 27 has an insulation mat 28 fixed to the underside thereof. Curvature is again exaggerated for the purposes of illustration, and the mat is pre-curved to suit the underside of the bonnet without additional bending. Fixings are applied in the direction of arrows 29. The preformed curvature of the insulation mat 28 resists sagging.

Two examples of scrim used in the invention are now given:

| | Example 1 | Example 2 |
|---|---|---|
| material | 70% PET non woven sheet | non woven viscose/ polyester sheet |
| weight | 87g/m² | 92g/m² |
| thickness | 0.6mm | 0.65mm |
| tensile strength length | 100N/50mm | 50N/50mm |
| tensile strength width | 60N/50mm | 55N/50mm |
| elongation length | 30% | 10% |
| elongation width | 40% | 30% |

The scrim layers may additionally include coatings resistant to oil, water, gas oil and/or fire. The layers are typically provided in a roll having a width of about 1250mm.

It will be understood that the number of adjacent layers of scrim is not limited, but in practice two or three layers may be sufficient. Furthermore it may be desirable to apply patches of scrim to a component in order to give greater or lesser curvature to one area of the component.

## Claims

1. An insulation component of heat bonded layered sheet materials, said sheet materials comprising a layer of polyurethane foam (11) and layers of non woven synthetic scrim (12, 13, 14), **characterized in that** said scrim has a greater elongation in one direction than in a direction orthogonal thereto, wherein said component comprises two adjacent layers of said scrim having the respective directions of greatest elongation arranged at greater than 30°.

2. A component according to claim 1 having said scrim (12, 13, 14) on both sides thereof.

3. A component according to claim 2, and comprising on one side two layers of scrim (13, 14), and on the other side one layer of scrim (12).

4. A component according to claim 3, wherein said two layers of scrim (13, 14) have a common direction of greatest elongation.

5. A component according to claim 3 or claim 4, wherein all layers of scrim (12, 13, 14) are of the same differential elongation.

6. A component according to any preceding claim, wherein said foam layer (11) is in the thickness range 0.5-10mm.

7. A component according to any preceding claim, wherein each layer of scrim (12, 13, 14) has a thickness of less than 1.0mm.

8. A component according to claim 7, wherein said scrim (12, 13, 14) comprises a needle punched viscose/polyester sheet.

9. A component according to any of claims 1-7, wherein said scrim (12, 13, 14) comprises 70% by weight polyethylene terephalate.

10. A component according to any preceding claim, wherein said scrim (12, 13, 14) has a weight of less than 100g/m².

11. A component according to any preceding claim, wherein said scrim (12, 13, 14) has an elongation in one direction in the range 5-40%, and in an orthogonal direction an elongation in the range 20-50%.

12. A component according to any of claims 1-10, wherein elongation of scrim (12, 13, 14) in one direction is at least 5% greater than in the orthogonal direction.

13. A component according to any of claims 1-10, wherein elongation of scrim (12, 13, 14) in one direction is not less than 50% of the elongation in the orthogonal direction.

14. A motor vehicle incorporating an insulation component according to any of claims 1-13.

15. A method of producing an insulation component comprising:
laying sheet materials one upon another, said materials comprising a core of unset resilient polyurethane foam (11), and two adjacent outer layers of scrim (12, 13, 14), said outer layers having greater elongation in one direction than another, and the outer layers having the respective directions of greatest elongation arranged at greater than 30°;
simultaneously pressing and cutting said layers in a heated press, to both adhere the layers and set the foam core;
and removing said component.

## Patentansprüche

1. Dämmkomponente aus heiß verklebtem mehrlagigem Bahnmaterial, wobei das Bahnmaterial eine Schicht Polyurethanschaum (11) und Schichten aus synthetischem Vliesstoff (12, 13, 14) umfasst, **dadurch gekennzeichnet, dass** der Vliesstoff in einer Richtung eine größere Dehnung als in einer dazu senkrechten Richtung aufweist, wobei diese Komponente zwei benachbarte Schichten dieses Vliesstoffs umfasst, deren jeweilige Richtungen größter Dehnung in einem Winkel von >30° angeordnet sind.

2. Komponente nach Anspruch 1, die den Vliesstoff (12, 13, 14) auf ihren beiden Seiten aufweist.

3. Komponente nach Anspruch 2, ferner auf einer Seite zwei Schichten Vliesstoff (13, 14) und auf der andern Seite eine Schicht Vliesstoff (12) aufweisend.

4. Komponente nach Anspruch 3, wobei die beiden Schichten Vliesstoff (13, 14) eine gemeinsame Richtung größter Dehnung aufweisen.

5. Komponente nach Anspruch 3 oder Anspruch 4, wobei alle Vliesstoffschichten (12, 13, 14) die gleiche unterschiedliche Dehnung haben.

6. Komponenten nach einem der vorangehenden Ansprüche, wobei die Schaumschicht (11) eine Dicke im Bereich 0,5 bis 10 mm aufweist.

7. Komponente nach einem der vorangehenden Ansprüche, wobei jede Schicht Vliesstoff (12, 13, 14) eine Dicke von weniger als 1,0 mm aufweist.

8. Komponente nach Anspruch 7, wobei der Vliesstoff (12, 13, 14) eine vernadelte Viskose/Polyester-Bahn umfasst.

9. Komponente nach einem der Ansprüche 1 bis 7, wobei der Vliesstoff (12, 13, 14) 70 Gewichtsprozent Polyethylenterephthalat umfasst.

10. Komponenten nach einem der vorangehenden Ansprüche, wobei der Vliesstoff (12, 13, 14) ein Gewicht von weniger als 100 g/m² aufweist.

11. Komponente nach einem der vorangehenden Ansprüche, wobei der Vliesstoff (12, 13, 14) in einer Richtung eine Dehnung im Bereich 5 bis 40 % und in einer Richtung senkrecht dazu eine Dehnung im Bereich 20 bis 50 % aufweist.

12. Komponente nach einem der Ansprüche 1 bis 10, wobei die Dehnung des Vliesstoffes (12, 13, 14) in einer Richtung mindestens 5 % größer als in der dazu senkrechten Richtung ist.

13. Komponente nach einem der Ansprüche 1 bis 10, wobei die Dehnung des Vliesstoffes (12, 13, 14) in eine Richtung nicht kleiner als 50 % der Dehnung in der dazu senkrechten Richtung ist.

14. Kraftfahrzeug, umfassend eine Dämmkomponente nach einem der Ansprüche 1 bis 13.

15. Verfahren zur Herstellung einer Dämmkomponente, umfassend:
- Aufeinanderlegen von Bahnmaterialien, wobei diese Materialien einen Kern aus nicht ausgehärtetem nachgiebigem Polyurethanschaum (11) und 2 angrenzende äußere Schichten Vliesstoff (12, 13, 14) umfassen, wobei die äußeren Schichten in einer Richtung eine größere Dehnung als in einer anderen Richtung haben und bei den äußeren Schichten die entsprechenden Richtungen größter Dehnung in einen Winkel von mehr als 30° angeordnet sind;
- gleichzeitiges Pressen und Schneiden dieser Schichten in einer geheizten Presse, um sowohl die Schichten miteinander zu verklebenden als auch den Schaumkernauszuhärten und
- Entnehmen der Komponente.

## Revendications

1. Composant isolant en des matériaux en film stratifiés liés par la chaleur, ces matériaux en film comprenant une couche de mousse de polyuréthane (11) et des couches de canevas synthétique non tissés (12, 13, 14), **caractérisé en ce que** le canevas présente un plus grand allongement dans une direction que dans la direction perpendiculaire à celle-ci, ce composant comprenant deux couches adjacentes de ce canevas dont les directions de plus grand allongement respectives définissent un angle supérieur à 30°.

2. Composant conforme à la revendication 1, comprenant le canevas (12, 13, 14) sur ses deux faces.

3. Composant conforme à la revendication 2, et comprenant sur une face deux couches de canevas (13, 14) et sur l'autre face une couche de canevas (12).

4. Composant conforme à la revendication 3, dans lequel les deux couches de canevas (13, 14) ont la même direction de plus grand allongement.

5. Composant conforme à la revendication 3 ou 4, dans lequel toutes les couches de canevas (12, 13, 14) présentent le même allongement différentiel.

6. Composant conforme à l'une quelconque des revendications précédentes, dans lequel la couche de mousse (11) a une épaisseur située dans la plage de 0.5 à 10 mm.

7. Composant conforme à l'une quelconque des revendications précédentes, dans lequel chacune des couches de canevas (12, 13, 14) a une épaisseur inférieure à 1,0 mm.

8. Composant conforme à la revendication 7, dans lequel le canevas (12, 13, 14) comprend un film de viscose/polyester aiguilleté.

9. Composant conforme à l'une quelconque des revendications 1 à 7 dans lequel le canevas (12, 13, 14) renferme 70% en poids de polyéthylène téréphtalate.

10. Composant conforme à l'une quelconque des revendications précédentes dans lequel le canevas (12, 13, 14) a un poids inférieur à 100 g/m².

11. Composant conforme à l'une quelconque des revendications précédentes dans lequel le canevas (12, 13, 14) a un allongement situé dans la plage de 5-40% dans une direction et un allongement situé dans la plage de 20-50% dans la direction perpendiculaire.

12. Composant conforme à l'une quelconque des revendications 1 à 10 dans lequel l'allongement du canevas (12, 13, 14) dans une direction est supérieur d'au moins 5% à l'allongement dans la direction perpendiculaire.

13. Composant conforme à l'une quelconque des revendications 1 à 10 dans lequel l'allongement du canevas (12, 13, 14) dans une direction n'est pas inférieur à 50% de l'allongement dans la direction perpendiculaire.

14. Véhicule à moteur comprenant un composant isolant conforme à l'une quelconque des revendications 1 à 13.

15. Procédé d'obtention d'un composant isolant comprenant les étapes consistant à :
- appliquer des matériaux en film les uns sur les autres, ces matériaux comprenant un noyau en une mousse de polyuréthane élastique non réticulée (11) et deux couches externes adjacentes de canevas (12, 13, 14), ces couches externes ayant un plus grand allongement dans une direction que dans une autre et les couches externes ayant des directions de plus grand allongement respectives positionnées selon un angle supérieur à 30°,
- comprimer et découper simultanément ces couches dans une presse chauffée pour à la fois faire adhérer les couches et réticuler le noyau en mousse, et
- extraire le composant.
